Europäisches Patentamt

European Patent Office

Office européen des brevets

(11) Veröffentlichungsnummer: **0 241 565**
**B1**

(12) **EUROPÄISCHE PATENTSCHRIFT**

(45) Veröffentlichungstag der Patentschrift:
**22.08.90**

(21) Anmeldenummer: **86104975.7**

(22) Anmeldetag: **11.04.86**

(51) Int. Cl.⁵: **H04Q 7/04,** H04B 7/26,
G01S 1/08

(54) **Verfahren zum Ermitteln der Aufenthaltsfunkzelle einer Mobilstation innerhalb eines Mobilfunknetzes.**

(43) Veröffentlichungstag der Anmeldung:
**21.10.87 Patentblatt 87/43**

(45) Bekanntmachung des Hinweises auf die Patenterteilung:
**22.08.90 Patentblatt 90/34**

(84) Benannte Vertragsstaaten:
**DE FR GB IT NL SE**

(73) Patentinhaber: **ANT Nachrichtentechnik GmbH,
Gerberstrasse 33, D-7150 Backnang(DE)**

(72) Erfinder: **Sperlich, Josef, Dipl.-Ing., Kelterweg 52,
D-7150 Backnang(DE)**

(56) Entgegenhaltungen:
DE-A- 3 242 997
DE-A- 3 335 128
GB-A- 2 017 448

**FUNKSCHAU, Band 2, 17. Januar 1986, Seiten 43-48,
München, DE; G.-L. RADKE: "Das neue
Funk-Telefonnetz "C": Digital signalisiert"
IEEE TRANSACTIONS ON VEHICULAR TECHNOLOGY,
Band VT-26, Nr. 1, Februar 1977, Seiten 7-11, New York,
US; S. RITER et al.: "Automatic vehicle location - An
overview"**

## Beschreibung

Die vorliegende Erfindung betrifft ein Verfahren zum Ermitteln derjenigen Funkzelle eines zellularen Mobilfunknetzes, mit deren zugehöriger Feststation eine Mobilstation in Funkverbindung treten soll, wobei von der Mobilstation Laufzeitmessungen an Signalen ausgeführt werden, welche die Feststationen umliegender Funkzellen aussenden, dann von der Mobilstation die Differenz gebildet wird zwischen den Signallaufzeiten von jeweils zwei benachbarten Feststationen zur Mobilstation und je nach dem Vorzeichen der Signallaufzeitdifferenz die Mobilstation entweder mit der einen oder der anderen Feststation in Verbindung gebracht wird und wobei im Falle einer Funkzellenvergrößerung bzw. -verkleinerung der Mobilstation ein Korrekturwert für die Signallaufzeiten von den Feststationen, deren zugehörige Funkzellengrenze verschoben werden soll, mitgeteilt wird, der proportional der Verschiebung der Funkzellengrenze ist.

Ein derartiges Verfahren ist aus der "Funkschau", Jan. 1986, S. 2-7 und aus den "NTG-Fachberichten", Bewegliche Funkdienste, Bd. 90, Nov. 1985, S. 157-171 sowie aus EP-A 0 141 994 bekannt. Für das in diesen Druckschriften beschriebene Verfahren ist Voraussetzung, daß das Mobilfunknetz synchron arbeitet, d.h. daß alle Feststationen ihre Signale gleichphasig aussenden. Von den Mobilstationen können die Signale der Basisstationen somit mit gleichem Zeitbezug empfangen werden. Eine solche Netzsynchronisierung ist aber recht aufwendig, insbesondere dann, wenn das Mobilfunknetz länderübergreifend ausgedehnt werden soll.

Der Erfindung liegt nun die Aufgabe zugrunde, ein Verfahren der eingangs genannten Art anzugeben, das es einer jeden Mobilstation auf einfache Weise ermöglicht, in einem asynchronen und mit variablen Funkzellgrößen arbeitenden Mobilfunknetz jeweils die Funkzelle ihres Aufenthaltortes zu ermitteln, mit deren zugehöriger Feststation sie dann in Funkverbindung tritt.

Erfindungsgemäß wird diese Aufgabe durch die im Kennzeichen des Patentanspruchs 1 angegebenen Merkmale gelöst.

Zweckmäßige Ausführungen der Erfindung gehen aus den Unteransprüchen hervor.

Anhand eines in der Zeichnung dargestellten Ausführungsbeispiels soll nachfolgend die Erfindung näher erläutert werden.

Fig. 1 zeigt einen Ausschnitt einer Funkzellenstruktur,
Fig. 2 zeigt die zeitlichen Zusammenhänge des erfindungsgemäßen Verfahrens und
Fig. 3 zeigt zwei benachbarte Funkzellen mit verschobener Zellgrenze.

In einem zellularen Mobilfunknetz sind den sich darin zunächst noch ohne Funkverbindung bewegenden Mobilstationen Kriterien zur Orientierung an die Hand zugeben, damit sie die für eine Funkverbindung in Frage kommende Feststation, in deren Funkzelle sie sich gerade aufhalten, finden. Außerdem benötigen die Mobilstationen, wenn sie eine Funkzelle verlassen und in eine andere überwechseln, Informationen darüber, in welche neue Funkzelle sie hineingelangen, auf deren Feststation sie sich dann umzuschalten haben. Diesen Vorgang bezeichnet man auch als Roaming. Um die genannten Vorgänge ausführen zu können, benötigen die Mobilstationen in gewissen Zeitabständen immer wieder Informationen über ihre Entfernungen von den in ihrer Umgebung befindlichen Feststationen.

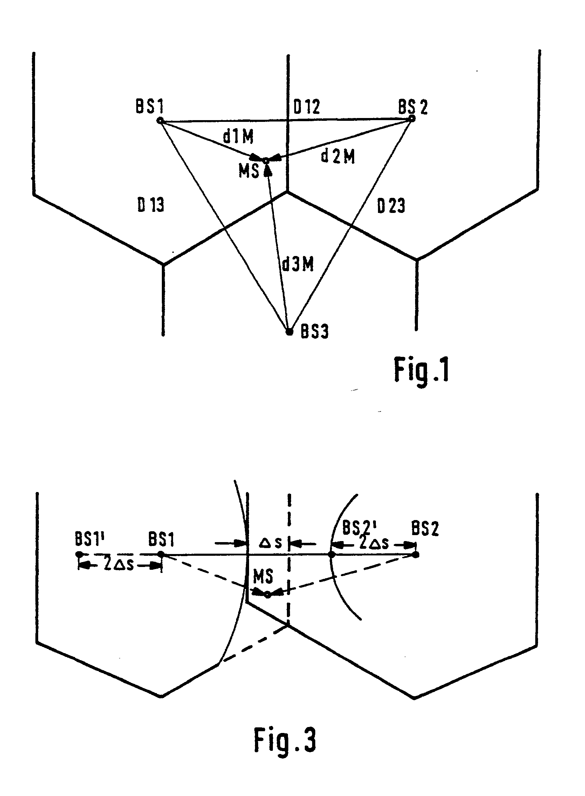

Die Fig. 1 zeigt beispielsweise drei Funkzellen mit ihren Feststationen BS1, BS2 und BS3, auch Basisstationen genannt. Eine Mobilstation MS befindet sich augenblicklich in der zur Feststation BS1 gehörenden Funkzelle, wobei sie zu dieser Feststation BS1 den Abstand d1M und zu den anderen beiden benachbarten Feststationen BS2 und BS3 die Abstände d2M und d3M hat. Diese Abstände d1M, d2M und d3M ändern sich ständig, wenn die Mobilstation MS in Bewegung ist. Dagegen sind die gegenseitigen Abstände D12, D13 und D23 der Feststationen BS1, BS2 und BS3 unveränderliche bekannte Größen.

Die Mobilstation orientiert sich zunächst dadurch im Funkzellennetz, daß sie von den Feststationen ausgesendete Organisationssignalkanäle empfängt und die empfangenen Organisationssignalkanäle bezüglich ihrer Signalqualitäten (Feldstärke, Signal- zu -Geräuschverhältnis) miteinander vergleicht, worauf sie sich bei der Feststation meldet, deren Organisationssginalkanal sie mit der besten Qualität empfangen hat. Diese Signalqualitätsmessung stellt zwar eine Orientierungshilfe für die Mobilstation dar, aber auf Grund der im Mobilfunk vorkommenden starken Feldstärkeschwankungen, die durch Abschattungen und Fadings verursacht werden, ist diese Methode nicht geeignet, die Funkzellgrenzen genau genug für die Mobilstation erkennbar zu machen. Erst recht ist diese Methode der Signalqualitätsmessung allein nicht geeignet, verkehrsbedingte Verschiebungen von Funkzellengrenzen zu detektieren.

Erst durch das nachfolgend beschriebene Verfahren der Signallaufzeitmessung ist eine Mobilstation in der Lage, recht genau zu ermitteln, in welcher Funkzelle sie sich augenblicklich befindet.

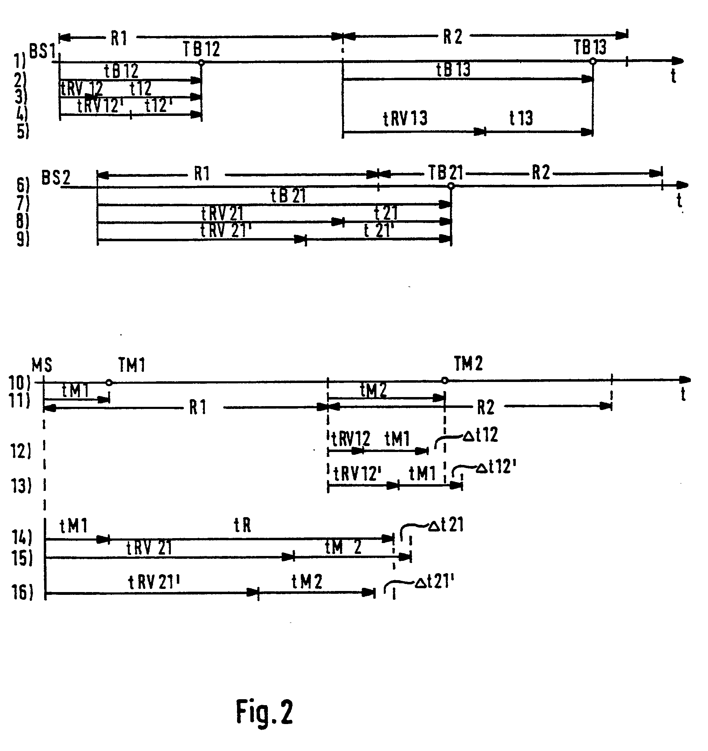

Bei dem hier zugrundeliegenden Mobilfunksystem benutzen alle Feststationen und Mobilstationen für das Aussenden und Empfangen von Signalen die gleiche Zeitmultiplex (TDMA)- Rahmenstruktur, und alle TDMA-Rahmen besitzen die gleiche Länge. Allerdings können die Rahmen in den Feststationen und Mobilstationen zeitlich gegeneinander versetzt sein, weil das Mobilfunknetz nicht synchronisiert ist. In den Zeilen 1), 6) und 10) der Fig. 2 ist beispielhaft dargestellt, wie die Rahmen R1 und die Rahmen R2 der zwei Feststationen BS1, BS2 und der Mobilstation zeitlich gegeneinander verschoben sind.

Von jeder Feststation werden zyklisch die Versatzzeiten der eigenen TDMA-Rahmen gegenüber den entsprechenden TDMA-Rahmen der umliegenden benachbarten Feststationen ermittelt. Dazu wird, wie im Zeitdiagramm der Fig. 2 dargestellt, von einem Meßempfänger z.B. in der Feststation BS1 der Zeitabstand tB12 (s. Zeile 2)) zwischen dem Beginn ihres Rahmens R1 und dem Zeitpunkt TB12 des Eintreffens eines von der Nachbarfeststation BS2 ausgesendeten Signals, welches den Beginn des Rahmens R1 der Feststation BS2 kennzeichnet, gemessen. Dieser Zeitabstand tB12, vermindert um die zwischen beiden Feststationen BS1 und BS2 bestehende konstante Signallaufzeit t12, ergibt die Rahmenversatzzeit tRV12 (s. Zeile 3)). Genauso wird, wie den Zeilen 2) und 5) zu entnehmen ist, in der Feststation B1 die Rahmenversatzzeit tRV13 gegenüber einer anderen Nachbarfeststation BS3 aus dem Zeitabstand tB13 und der Signallaufzeit t13 ermittelt. In den Zeilen 7) und 8) sind der Zeitabstand tB21, die Signallaufzeit t21 und die Rahmenversatzzeit tRV21 angegeben, welche in der Feststation BS2 gegenüber der Feststation BS1 gemessen worden sind.

Wegen der gleichen Rahmenstruktur in allen Feststationen läßt sich die Rahmenversatzzeit zwischen zwei Feststationen auch an Hand beliebiger anderer als der in dem Ausführungsbeispiel herangezogenen Rahmen bestimmen.

Bei den Signallaufzeiten t12, t13, t21 sind auch Laufzeitverzögerungen berücksichtigt, welche in den Sendern und Empfängern der Feststationen verursacht werden.

Jede Feststation sollte die Rahmenversatzzeit gegenüber jeder seiner benachbarten Feststationen etwa alle 2 Minuten neu ermitteln, so daß bei einer Frequenzgenauigkeit im Mobilfunknetz von $10^{-9}$ die Mobilstationen ihre Abstände von den Feststationen auf ± 100 m genau bestimmen können.

Eine Mobilstation MS, die sich z.B. auf Grund der günstigsten Empfangsbedingungen bei der Feststation BS1 gemeldet hat, bekommt im Organisationssignalkanal von dieser die Rahmenversatzzeit tRV12, welche die Feststation BS1 gegenüber der Nachbarfeststation BS2 ermittelt hat, mitgeteilt. Zudem wird in der Mobilstation MS der Zeitabstand tM1 (s. Zeile 11)) zwischen dem Beginn ihres Rahmens R1 und dem Zeitpunkt TM1 des Eintreffens eines von der Feststation BS1 ausgesendeten Signals, welches den Beginn des Rahmens R1 in dieser Feststation BS1 kennzeichnet, gemessen. Und ebenso wird in der Mobilstation MS der Zeitabstand tM2 (s. Zeile 11)) zwischen dem Beginn ihres Rahmens R2 und dem Zeitpunkt TM2 des Eintreffens eines von der anderen Feststation BS2 ausgesendeten Signals gemessen, welches den Beginn des Rahmens R2 in der Feststation BS2 kennzeichnet. Die Mobilstation hat ihre Empfangsfrequenz jeweils auf die Sendefrequenz derjenigen Feststation einzustellen, von der sie ein Signal empfangen soll.

Um herauszufinden, welcher von beiden Feststationen BS1 und BS2 die Mobilstation näher lokalisiert ist, wird in der Mobilstation die Differenz zwischen der Signallaufzeit von der einen Feststation BS1 bis zu ihr und der Signallaufzeit von der anderen Feststation BS2 bis zu ihr auf folgende Weise bestimmt:

Die Signallaufzeit t12 ergibt sich, wie den Zeilen 11) und 12) der Fig. 2 zu entnehmen ist, dadurch, daß in der Mobilstation MS die Differenz gebildet wird zwischen dem Zeitabstand tM2 gegenüber der Feststation BS2 und dem Zeitabstand tM1 gegenüber der Feststation BS1 zuzüglich der Rahmenversatzzeit tRV12 der Feststation BS1 gegenüber der Feststation BS2.

$$\Delta t12 = tM2 - (tM1 + tRV12)$$

Diese Signallaufzeitdifferenz ist so korrigiert, daß darin schaltungsbedingte Laufzeitverzögerungen der Sender und Empfänger in den Feststationen und der Mobilstation nicht eingehen.

Stellt sich für die Signallaufzeitdifferenz ein Wert $\Delta t12 > 0$ ein, so befindet sich die Mobilstation näher bei der Feststation BS1, und für eine Signallaufzeitdifferenz $\Delta t12 < 0$ befindet sie sich näher bei der anderen Feststation BS2. Bei einer Signallaufzeitdifferenz $\Delta t12 = 0$ befindet sich die Mobilstation genau auf der Funkzellengrenze zwischen den beiden benachbarten Feststationen BS1 und BS2.

Während bei der oben beschriebenen Bestimmung der Signallaufzeitdifferenz $\Delta t12$ die Feststation BS1 als Bezug für die Mobilstation galt, sei an Hand der Zeilen 14) und 15) der Fig. 2 die Bestimmung der Signallaufzeitdifferenz $\Delta t21$ erläutert, wenn BS2 die Bezugsfeststation für die Mobilstation ist. Die Signallaufzeitdifferenz $\Delta t21$ ergibt sich dann aus den Zeitabständen tM1 und tM2 gegenüber den Feststationen BS1 und BS2 und der Rahmenversatzzeit tRV21 der Feststation BS2 gegenüber der Feststation BS1.

$$\Delta t21 = tM1 - (tM2 + tRV21)$$

Beim in den Zeilen 14) und 15) der Fig. 2 dargestellten Beispiel ist die Summe des Zeitabstandes tM2 und der Rahmenversatzzeit tRV21 größer als eine Rahmendauer tR. In einem solchen Fall muß zunächst von der Summe des Zeitabstandes tM2 und der Rahmenversatzzeit tRV21 die Rahmendauer tR abgezogen werden, bevor die Differenz gegen den Zeitabstand tM1 gebildet wird.

Das vorangehend geschilderte Verfahren, nach dem jeweils von zwei Feststationen diejenige bestimmt wird, zu der die Mobilstation den geringeren Abstand aufweist, wird nun mit all den Feststationen durchgeführt, deren Signale die Mobilstation mit ausreichend guter Qualität empfängt, bis diejenige Feststation gefunden worden ist, zu der die Mobilstation die geringste Entfernung hat.

Im dem bisher betrachteten Fall verlief die Grenze jeweils zweier benachbarter Funkzellen mitten zwischen deren zugehörigen Basisstationen. Oft ist es aber zweckmäßig, je nach dem Verkehrsaufkommen Funkzellen zu vergrößern oder zu verkleinern; d.h. die Funkzellengrenze zwischen zwei benachbarten Feststationen wird näher zur einen Feststation hin und weiter von der anderen Feststation weggerückt. Bei einer Funkzellengrenzverschiebung würde die wirkliche Laufzeitdifferenz die Mobilstation einer falschen Funkzelle zuweisen. Denn bei einer Funkzellengrößenänderung würde ein Ort, an dem eine Mobilstation eine Differenz der tatsächlichen, Laufzeiten von Null ermittelt, nicht mehr auf der Funkzellengrenze liegen. Es wird daher der Mobilstation von den Feststationen, deren Funkzellengrenze verschoben werden soll, ein Korrekturwert der tatsächlichen Signallaufzeiten mitgeteilt, welcher die Signallaufzeitdifferenz entsprechend der Verschiebung der Funkzellengrenze verändert.

Wenn beispielsweise, wie in Fig. 3 dargestellt, die Grenze der Funkzellen der beiden benachbarten Feststationen BS1 und BS2 in Richtung auf die Feststationen BS1 um die Strecke s verschoben werden soll, dann wird von der Feststation BS1 die tatsächlich ermittelte Rahmenversatzzeit tRV12 um den Zeitbetrag

$$t_K = \frac{2\Delta s}{V}$$

(V ≠ Wellenausbreitungsgeschwindigkeit) vergrößert auf die neue fiktive Rahmenversatzzeit tRV12' = tRV12 + $t_K$, welche dann der Mobilstation zur Bestimmung einer neuen fiktiven Signallaufzeitdifferenz $\Delta$t12' mitgeteilt wird. Diese neue Signallaufzeitdifferenz $\Delta$t12' (s. Zeile 13) in Fig. 2) veranlaßt die Mobilstation ihre Funkverbindung mit der Feststation BS2 auszunehmen, obwohl sie sich näher bei der Feststation BS1 befindet.

In der Feststation BS1 wird die um

$$t_K = \frac{2\Delta s}{V}$$

vergrößerte Rahmenversatzzeit tRV12' dadurch gebildet, daß der gemessene Zeitabstand tB12 nicht um die bekannte Signallaufzeit t12, sondern um die Signallaufzeit t12' = t12 - $t_K$ (s. Zeilen 2) und 4) in Fig. 2) vermindert wird.

Wie aus der Fig. 3 ersichtlich, liegt nämlich die neue Zellgrenze zwischen den Feststationen BS1 und BS2 nun in der Mitte zwischen der ersten Feststation BS1 und einer zweiten fiktiven Feststation BS2'. Die fiktive Feststation BS2' ist dabei um eine Strecke 2$\Delta$s näher als die wirkliche Feststation BS2 an die Feststation BS1 herangerückt. Daher ist auch die fiktive Laufzeit t12' um die Zeit

$$t_K = \frac{2\Delta s}{V}$$

kürzer als die wirkliche Laufzeit t12, die durch die festliegende bekannte Entfernung zwischen den beiden Feststationen BS1 und BS2 gegeben ist.

Umgekehrt stellt sich von der Feststation BS2 aus gesehen die neue Zellgranze als in der Mitte zwischen der Feststation BS2 und einer fiktiven Feststation BS1' dar, die um eine Strecke 2$\Delta$s weiter als die wirkliche Feststation BS1 von der Feststation BS2 entfernt liegt. Daher ist die fiktive Laufzeit t12' um die Zeit

$$t_K = \frac{2\Delta s}{V}$$

länger als die wirkliche Laufzeit t12.

Wie von der Feststation BS2 aus gesehen eine Verschiebung der Funkzellengrenze auf die benachbarte Feststation BS1 zu sich in der fiktiven Rahmenversatzzeit tRV21' ausdrückt und diese fiktive Rahmenversatzzeit tRV21' sich auf die Signallaufzeitdifferenz $\Delta$t21' auswirkt, zeigen die Zeilen 9) und 16) in der Fig. 2.

**Patentansprüche**

1. Verfahren zum Ermitteln derjenigen Funkzelle eines zellularen Mobilfunknetzes, mit deren zugehöriger Feststation eine Mobilstation in Funkverbindung treten soll, wobei von der Mobilfunkstation Laufzeitmessungen an Signalen ausgeführt werden, welche die Feststationen umliegender Funkzellen aussenden, dann von der Mobilstation die Differenz gebildet wird zwischen den Signallaufzeiten von jeweils zwei benachbarten Feststationen zur Mobilstation und je nach dem Vorzeichen der Signallaufzeitdifferenz die Mobilstation entweder mit der einen oder der anderen Feststation in Verbindung gebracht wird un wobei im Falle einer Funkzellenvergrößerung bzw. -verkleinerung der Mobilstation ein Korrekturwert für die Signallaufzeiten von den Feststationen, deren zugehörige Funkzellengrenze verschoben werden soll, mitgeteilt wird, der proportional der Verschiebung der Funkzellengrenze ist, dadurch gekennzeichnet, daß von allen Feststationen (BS1, BS2, BS3) und Mobilstationen (MS) für das Aussenden und Empfangen von Signalen die gleiche Zeitmultiplex-Rahmenstruktur und -Rahmenlänge verwendet wird, daß von einer jeden für die Verbindung mit der Mobilstation evtl. in Frage kommenden Feststation (BS1, BS2, BS3) ermittelt wird, um welche Rahmenversatzzeiten (tRV12, tRV13, tRV21) ihre Rahmen (R1, R2) gegenüber den Rahmen (R1, R2) der umliegenden ebenfalls für die Verbindung mit der Mobilstation (MS) evtl. in Frage kommenden Feststationen (BS1, BS2, BS3) versetzt sind, daß der Mobilstation diese Rahmenversatzzeiten (tRV12, tRV13, tRV21) mitgeteilt werden, daß in der Mobilstation (MS) die Zeitabstände (tM1, tM2) zwischen dem Beginn eines ihrer Rahmen (R1, R2) und dem Eintreffen zweier von jeweils zwei benachbarten Feststationen (BS1, BS2) ausgesendeter Signale ermittelt werden, die den Beginn der Rahmen (R1, R2) in den beiden Feststationen (BS1, BS2) kennzeichnen, daß in der Mobilstation (MS) die Differenz ($\Delta$t12) gebildet wird aus dem Zeitabstand (tM2) gegenüber der einen der zwei benachbarten Feststationen (BS2) und dem Zeitabstand (tM1) gegenüber der anderen Feststation (BS1) zuzüglich der zwischen beiden Feststationen (BS1, BS2) ermittelten Rahmenversatzzeit (tRV12), welche Differenz der Signallaufzeitdifferenz zwischen der Mobilstation (MS) und den beiden Feststationen (BS1, BS2) entspricht, und daß eine Verschiebung der Grenze zwischen zwei Funkzellen durch Korrektur der Rahmenversatzzeit (tRV12) zwischen den zugehörigen Feststationen (BS1, BS2) erwirkt wird.

2. Verfahren nach Anspruch 1, dadurch gekennzeichnet, daß die Rahmenversatzzeit (tRV12) zwischen jeweils zwei Feststationen (BS1, BS2) dadurch ermittelt wird, daß von einer Feststation (BS1) der Zeitabstand (tB12) zwischen dem zeitlichen Beginn eines ihrer Rahmen (R1) und dem Zeitpunkt des Eintreffens eines von der anderen Feststation (BS2) ausgesendeten Signals, welches den Beginn eines Rahmens (R1) in der letzteren Feststation (BS2) kennzeichnet, gemessen wird und daß dieser Zeitabstand (tB12) um die Signallaufzeit (t12) zwischen den beiden Feststationen (BS1, BS2), welche auf Grund ihres festen gegenseitigen Abstandes bekannt ist, vermindert wird.

3. Verfahren nach Anspruch 1, <u>dadurch gekennzeichnet</u>, daß bei einer Verschiebung der Grenze zwischen zwei Funkzellen die Rahmenversatzzeit (tRV12), welche von einer Feststation (BS1), deren zugehörige Funkzellengrenze um eine Strecke Δs weiter fortgerückt werden soll, gegenüber der benachbarten Feststation (BS2) ermittelt worden ist, deren zugehörige Funkzellengrenze um dieselbe Strecke Δs näher herangerückt werden soll, um den Zeitbetrag

$$t_K = \frac{2\Delta s}{v}$$

vermindert wird, wobei v die Wellenausbreitungsgeschwindigkeit ist, und daß die Rahmenversatzzeit (tRV12) welche von einer Feststation (BS1), deren zugehörige Funkzellengrenze um eine Strecke Δs näher herangerückt werden soll, gegenüber der benachbarten Feststation (BS2) ermittelt worden ist, deren zugehörige Funkzellengrenze um dieselbe Strecke Δs weiter fortgerückt werden soll, um den Zeitbetrag

$$t_K = \frac{2\Delta s}{v}$$

erhöht wird.

**Claims**

1. Method for determining that radio cell of a cellular mobile radio network, with the associated fixed station of which a mobile station shall enter into radio connection, wherein transit time measurements are performed by the mobile radio station on signals which the fixed stations of surrounding radio cells emit, the difference is then formed by the mobile station between the signal transit times from two respectively adjacent fixed stations to the mobile station and the mobile station is brought into connection with either the one or the other fixed station in accordance with the sign of the signal transit time difference and wherein, in the case of an enlargement or a reduction in the radio cell, a correction value, which is proportional to the displacement of the radio cell boundary, for the signal transit times from the fixed stations, the associated radio cell boundary of which is to be displaced, is communicated to the mobile station, characterised thereby, that the same time multiplex frame structure and frame length is used by all fixed stations (BS1, BS2, BS3) and mobile stations (MS) for the emission and reception of signals, that it is ascertained from each one fixed station (BS1, BS2, BS3) possibly coming into question for the connection with the mobile station, by which frame displacement times (tRV12, tRV13, tRV21) their frames (R1, R2) are displaced relative to the frames (R1, R2) are displaced relative to the frames (R1, R2) of the surrounding fixed stations (BS1, BS2, BS3) likewise possibly coming into question for the connection with the mobile station, that these frame displacement times (tRV12, tRV13, tRV21) are communicated to the mobile station, that the time intervals (tM1, tM2) are ascertained in the mobile station (MS) between the beginning of one of its frames (R1, R2) and the arrival of two signals which are emitted from two respectively adjacent fixed stations (BS1, BS2) and identify the beginning of the frames (R1, R2) in both the fixed stations (BS1, BS2), that the difference (Δt12) is formed in the mobile station (MS) from the time interval (tM2) relative to the one of the two adjacent fixed stations (BS2) and the time interval (tM1) relative to the other fixed station (BS1) plus the frame displacement time (tRV12) ascertained between both the fixed stations (BS1, BS2), which difference corresponds to the signal transit time difference between the mobile station (MS) and both the fixed stations (BS1, BS2), and that a displacement of the boundary between two radio cells is effected through correction of the frame displacement time (tRV12) between the associated fixed stations (BS1, BS2).

2. Method according to claim 1, characterised thereby, that the frame displacement time (tRV12) between respective two fixed stations (BS1, BS2) is ascertained thereby, that the time interval (tB12) is measured by one fixed station (BS1) between the beginning in time of one of its frames (R1) and the instant of the arrival of a signal which is emitted from the other fixed station (BS2) and identifies the beginning of a frame (R1) in the latter fixed station (BS2) and that this time interval (tB12) is reduced by the signal transit time (t12) between both the fixed stations (BS1, BS2), which is known by reason of their fixed mutual spacing.

3. Method according to claim 1, characterised thereby, that on a displacement of the boundary between two radio cells, the frame displacement time (tRV12), which has been ascertained from one fixed station (BS1), the associated radio cell boundary of which is to be moved further through a distance Δs, relative to the adjacent fixed station (BS2), the associated radio cell boundary of which is to be moved closer through the same distance Δs, is reduced by the time amount $t_K = 2\Delta s/v$, wherein v is the speed of wave propagation, and that the frame displacement time (tRV12), which has been ascertained from one fixed station (BS1), the associated radio cell boundary of which is to be moved closer through a distance Δs, relative to the adjacent fixed station (BS2), the associated radio cell boundary of which is to be moved further through the same distance Δs, is increased by the time amount $t_K = 2\Delta s/v$.

5

## Revendications

1. Procédé pour déterminer la cellule radioélectrique d'un réseau cellulaire de radiocommunication mobile, en particulier de radiotéléphonie, avec la station fixe coordonnée de laquelle une station mobile doit entrer en liaison radioélectrique, procédé dans lequel la station mobile exécute des mesures de temps de propagation sur des signaux émis par les stations fixes de cellules radioélectriques environnantes, la station mobile forme ensuite la différence entre les temps de propagation de signaux émis chaque fois par deux stations fixes voisines, jusqu'à la station mobile et, suivant le signe de la différence de temps de propagation de signaux, la station mobile est amenée en liaison, soit avec l'une, soit avec l'autre station fixe, et dans lequel, dans le cas d'un agrandissement ou d'une réduction de cellules radioélectriques, la station mobile est informée d'une valeur de correction pour les temps de propagation de signaux de stations fixes dont la frontière ou limite de cellule correspondante doit être décalée, valeur de correction qui est proportionnelle au décalage de la limite de cellule, caractérisé en ce que toute les stations fixes (BS1, BS2, BS3) et mobiles (MS) utilisent la même structure de trame de multiplexage temporel et la même longueur de trame, que chaque station fixe (BS1, BS2, BS3) éventuellement envisageable pour la liaison avec la station mobile, détermine de quels temps de décalage de trames (tRV12, tRV13, tRV21) ses trames (R1, R2) sont décalées par rapport aux trames (R1, R2) des stations fixes (BS1, BS2, BS3) environnantes, également envisageables pour la liaison avec la station mobile (MS), que la station mobile est informée de ces temps de décalage de trames (tRV12, tRV13, tRV21), que la station mobile (MS) détermine les intervalles de temps (tM1, tM2) entre le début d'une de ses trames (R1, R2) et l'arrivée de deux signaux émis chaque fois par deux stations fixes voisines (BS1, BS2) et caractérisant le début des trames (R1, R2) dans ces deux stations fixes (BS1, BS2), que la station mobile (MS) forme la différence (Δt12) entre l'intervalle de temps (tM2) par rapport à l'une des deux stations fixes voisines (BS2) et l'intervalle de temps (tM1) par rapport à l'autre station fixe (BS1), majoré du temps de décalage des trames (tRV12) déterminé entre les deux stations fixes (BS1, BS2), cette différence correspondant à la différence de temps de propagation de signaux entre la station mobile (MS) et les deux stations fixes (BS1, BS2), et qu'un décalage de la limite entre deux cellules radioélectriques est produit par la correction du temps de décalage de trames (tRV12) entre les stations fixes (BS1, BS2) correspondantes.

2. Procédé selon la revendication 1, caractérisé en ce que le temps de décalage de trames (tRV12) entre chaque fois deux stations fixes (BS1, BS2) est déterminé par la mesure, par une station fixe (BS1), de l'intervalle de temps (tB12) entre le commencement, dans le temps, d'une de ses trames (R1) et l'instant d'arrivée d'un signal émis par l'autre station fixe (BS2) et qui caractérise le commencement d'une trame (R1) dans cette dernière station fixe (BS2), et par la défalcation, de cet intervalle de temps (tB12),

du temps de propagation de signaux (t12) entre les deux stations fixes (BS1, BS2), temps qui est connu en raison de la distance fixe entre ces deux stations.

3. Procédé selon la revendication 1, caractérisé en ce que, dans le cas d'un décalage de la limite entre deux cellules radioélectriques, le temps de décalage de trames (tRV12), lequel a été déterminé par une station fixe (BS1) dont la limite de cellule radioélectrique correspondante doit être éloignée davantage d'une distance Δs, par rapport à la station fixe voisine (BS2) dont la limite de cellule radioélectrique correspondante doit être approchée davantage de la même distance Δs, est diminué d'une quantité de temps

$$t_K = \frac{2\Delta s}{V},$$

où V est la vitesse de propagation des ondes, et que le temps de décalage de trames (tRV12), qui a été déterminé par une station fixe (BS1) dont la limite de cellule radioélectrique correspondante doit être approchée davantage d'une distance Δs, par rapport à la station fixe voisine (BS2) dont la limite de cellule radioélectrique correspondante doit être éloignée davantage de cette même distance Δs, est augmenté de la quantité de temps

$$t_K = \frac{2\Delta s}{V}.$$

Fig.1

Fig.3

Fig.2